Europäisches Patentamt

European Patent Office

Office européen des brevets

(19)

(11) Veröffentlichungsnummer: **0 050 687**
A1

(12) # EUROPÄISCHE PATENTANMELDUNG

(21) Anmeldenummer: 80107472.5

(22) Anmeldetag: 29.11.80

(51) Int. Cl.³: **F 01 K 23/06**
F 02 C 1/04, F 02 C 6/18

(30) Priorität: 28.10.80 CH 8006/80

(43) Veröffentlichungstag der Anmeldung:
05.05.82 Patentblatt 82/18

(84) Benannte Vertragsstaaten:
AT BE CH DE FR GB IT LI LU NL SE

(71) Anmelder: GEBRÜDER SULZER
AKTIENGESELLSCHAFT
Zürcherstrasse 9
CH-8401 Winterthur(CH)

(72) Erfinder: Aguet, Emile
Zinkzikerbergstrasse 9
CH-8404 Winterthur(CH)

(74) Vertreter: Dipl.-Ing. H. Marsch Dipl.-Ing. K. Sparing
Dipl.-Phys.Dr. W.H. Röhl
Rethelstrasse 123
D-4000 Düsseldorf(DE)

(54) Heissluftturbinen-Dampfkraftanlage.

(57) Der Verdichter (1) der Heissluftturbinengruppe ist austrittsseitig über die Sekundärseite eines Rekuperators (4) und einem im Bereich sehr hohen Wärmeübergangs einer Wirbelschichtfeuerung (24) befindlichen Wärmeübertrager (9) mit der Heissluftturbine (14) verbunden. Die in der Heissluftturbine (14) entspannte Luft wird über die Primärseite des Rekuperators (4) als Verbrennungsluft der Wirbelschichtfeuerung zugeführt.

Dadurch, dass die der Wirbelschichtfeuerung zugeführte Luft in dem Rekuperator zurückgekühlt wird, bevor sie in die Feuerung eingeblasen wird, kann ein Teil der Wärmeübertragung im Bereich der Feuerung entfallen. Die der Feuerung direkt ausgesetzten, besonders hoch beanspruchten und daher aus teurem Material bestehenden Heizflächen können somit verkleinert werden. Ausserdem sinkt wegen der kleineren Heizflächen der Druckabfall im Wirbelbett.

./...

Fig. 1

0050687

Gebrüder Sulzer Aktiengesellschaft, Winterthur/Schweiz

## Heissluftturbinen-Dampfkraftanlage

Die Erfindung betrifft eine Heissluftturbinen-Dampfkraftanlage nach dem Oberbegriff des Anspruchs 1. Es ist eine solche Anlage vorgeschlagen worden (siehe europäische Offenlegungsschrift 79 101 525 vom 29.10.1980), bei der die Abluft der Heissluftturbine in einem ersten Zweig zu einem Abluftkessel und in einem zweiten Zweig direkt dem Wirbelbett zugeführt wird.

Es ist Aufgabe der Erfindung, eine Anlage nach dem Oberbegriff des Anspruchs 1 preislich und/oder thermodynamisch günstiger zu bauen als die vorgeschlagene Anlage.

Diese Aufgabe wird durch die Merkmale des Kennzeichens des Anspruchs 1 gelöst. Dadurch, dass die der Feuerung zugeführte Luft in einem Rekuperator zurückgekühlt wird, bevor sie in die Feuerung eingeblasen wird, kann ein Teil der Wärmeübertragung im Bereich der Feuerung entfallen. Die der Feuerung direkt ausgesetzten, besonders hoch beanspruchten und daher aus teurem Material bestehenden Heizflächen

können somit verkleinert werden. Ueberdies sinkt im Falle der Verwendung eines Wirbelbettes der von der Grösse der Heizflächen beeinflusste Druckabfall im Wirbelbett.

Bei einer Anlage nach Anspruch 2 lässt sich die fühlbare Wärme der entspannten Luft sehr weitgehend nutzen.

Durch das Druckerhöh_ungsgebläse nach Anspruch 3 kann der Druckabfall im Wirbelbett derart kompensiert werden, dass auf eine Drosselung des den Abluftkessel durchsetzenden Teilstroms der Abluft verzichtet werden kann, ohne dass nach dem Wirbelbett ein Abluftventilator nötig wäre. Ein solcher Ventilator brächte den Nachteil, dass der Gaszug mit den der Wirbelschicht nachgeschalteten Heizflächen unter erheblichen Unterdruck gesetzt würde, was einen grossen konstruktiven Aufwand bedingen würde.

Anspruch 4 bringt Vorteile beim Teillastbetrieb.

Anspruch 5 verbessert den Wirkungsgrad und zudem kann ein Heizkessel eingespart werden. Da überdies Radiatoren und Zwischenwärmeübertrager entfallen, lässt sich bei mässigen Transportdistanzen der durch die beanspruchte Verwendung der Abluft sich ergebende Mehraufwand für grösseren Leitungsquerschnitt verantworten.

Nach Anspruch 6 wird ein weiterer Wirkungsgradgewinn erzielt.

Zwei Ausführungsbeispiele der Erfindung werden in der folgenden Beschreibung anhand der Zeichnung näher erläutert. Es zeigen:

Fig. 1  ein Schema einer ersten Anlage nach der Erfindung und

Fig. 2 ein Schema einer zweiten Anlage.

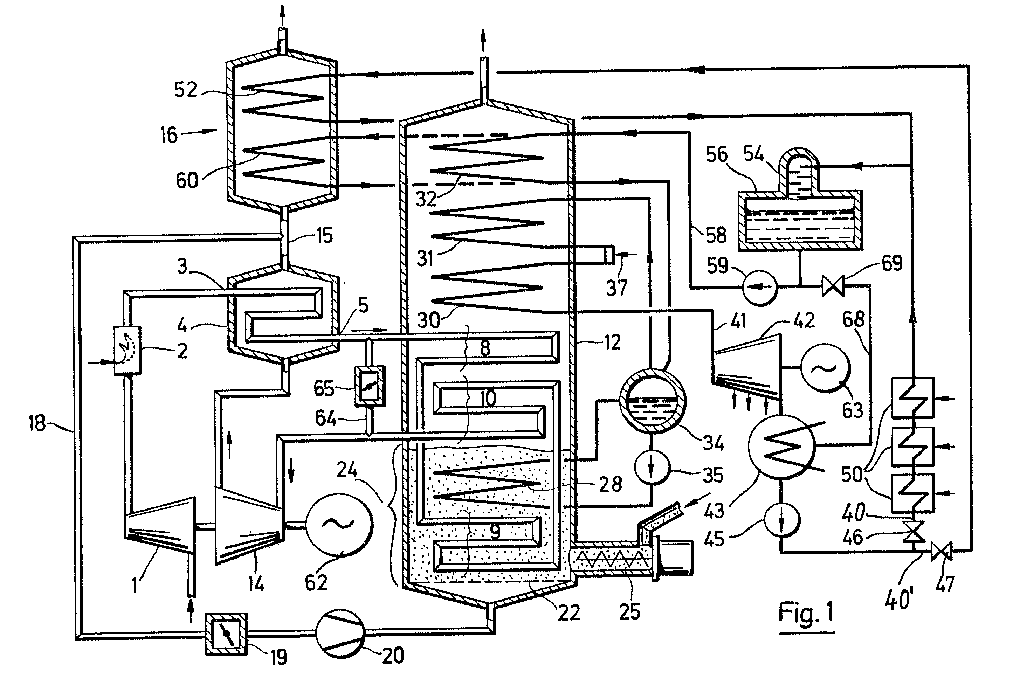

Gemäss Fig. 1 ist ein Verdichter 1 über eine Anfahrbrennkammer 2 mit dem sekundärseitigen Eingang 3 eines Rekuperators 4 verbunden. Der Ausgang 5 der Sekundärseite des Rekuperators 4 ist über drei Heizflächen 8, 9 und 10, die sich in einem Vertikalzug eines wirbelschichtbefeuerten Dampferzeugers 12 befinden, mit dem Eintritt einer Heissluftturbine 14 verbunden. An deren Austrittsstutzen ist über die Primärseite des Rekuperators 4 und eine Verbindungsleitung 15 ein Abluftkessel 16 angeschlossen, aus dem die Abluft schliesslich - weitgehend zurückgekühlt - ins Freie strömt.

Von der Verbindungsleitung 15 führt eine Zweigleitung 18 über eine Drosselklappe 19 und ein Druckerhöhungsgebläse 20 zum Eintritt des Dampferzeugers 12, der über einem Lochboden 22 das Wirbelbett 24 einer Wirbelschichtfeuerung enthält. Vom Zubehör der Wirbelschichtfeuerung ist lediglich eine Kohlendosiereinrichtung 25 dargestellt; im übrigen wird auf den Stand der Technik verwiesen. In dem Wirbelbett 24 sind die Heizfläche 9 und oberhalb dieser ein Verdampfer 28 eingetaucht. Oberhalb des Verdampfers 28 und ausserhalb des Wirbelbetts folgen die Heizflächen 10 und 8. Diesen beiden sind im Rauchgasstrom ein Endüberhitzer 30, ein erster Ueberhitzer 31 und ein Economiser 32 nachgeschaltet.

Der Economiser 32, der Verdampfer 28 mit einer Trommel 34 und einer Umwälzpumpe 35, der erste Ueberhitzer 31 mit einer Wassereinspritzstelle 37 und der Endüberhitzer 30 bilden zusammen mit den sie verbindenden Rohrleitungen einen Zwangumlaufdampferzeuger. Am Austritt des Endüberhitzers 30 ist über eine Frischdampfleitung 41 eine Dampfturbine 42 mit einem Kondensator 43 angeschlossen. Der Sumpf des Kondensators 43 ist über eine Kondensatpumpe 45 und zwei Leitungen 40 und 40' mit einer Kette von drei Kondensatvorwärmern 50 bzw. mit einem im Abluftkessel 16 angeordneten Vorwärmer 52 verbunden. Die beiden Leitungen 40 und 40', die ein Verteilventil 46 bzw. 47 aufweisen, führen dann zum Entgaseraufsatz 54 eines Speisewasserbehälters 56. Von diesem Behälter führt eine Speisewasserleitung 58 mit Speisepumpe 59 zum Economiser 32 sowie zu einem dazu parallel geschalteten Vorwärmer 60, der luftseitig stromoberhalb des Vorwärmers 52 im Abluftkessel 16 angeordnet ist.

Der Verdichter 1 und die Heissluftturbine 14 sitzen zusammen mit einem ersten Nutzleistungsgenerator 62 auf einer gemeinsamen Welle. Der Nutzleistungsgenerator kann auch als Anwurfmotor geschaltet werden. Die Dampfturbine 42 ist mit einem Nutzleistungsgenerator 63 gekuppelt.

Im Betrieb der Anlage wird beispielsweise die vom Verdichter 1 angesaugte Luft auf 7 bar bei 258 $^{\circ}$C verdichtet, im Rekuperator 4 auf 431 $^{\circ}$C erhitzt und in den Heizflächen 8 bis 10 auf 830 $^{\circ}$C gebracht. Bei der anschliessenden Expansion dieser Luft in der Heissluftturbine 14 von 6,65 auf 1,03 bar sinkt die Lufttemperatur auf 458 $^{\circ}$C, wonach die Luft im Rekuperator 4 auf 285 $^{\circ}$C abgekühlt wird. Zwischen den Vorwärmern 60 und 52 wird mit einer Lufttemperatur von 160 $^{\circ}$C und am Austritt des Abluftkessels 16 noch mit 60 $^{\circ}$C gerechnet. Am Austrittsstutzen des Druckerhöhungsgebläses 20 beträgt der Luftzustand 1,2 bar bei 318 $^{\circ}$C und an der Oberfläche des Wirbelbettes werden 900$^{\circ}$C eingestellt. Nach stufenweiser Abkühlung auf 802 $^{\circ}$C(gemessen zwischen den Heizflächen 10 und 8), 626 $^{\circ}$C (stromoberhalb des Endüber-hitzers 30) und 340 $^{\circ}$C (am Eintritt des Economisers 32) verlässt das Rauchgas den Zwangumlaufdampferzeuger 12 mit 170 $^{\circ}$C.

Wie diese Temperaturangaben zeigen, liegen die Temperaturen am Druckerhöhungsgebläse 20 zwischen 285 und 318 $^{\circ}$C, also in einem Bereich, in dem keinerlei Materialprobleme auftreten.

Die infolge der Rückkühlung im Rekuperator 4 tiefere Temperatur der Verbrennungsluft erlaubt die im Wirbelbett befindlichen Heiflächen 9 und 28 zu verkleinern. Dieser Effekt lässt sich noch stärker nützen, indem die Verbrennungsluft, vorzugsweise stromoberhalb des Druckerhöhungsgebläses 20, noch tiefer zurückgekühlt wird - soweit es der Betrieb der Wirbelschichtfeuerung zulässt. Entsprechend kann die Verbrennungsluft statt an der Verbindungsleitung 15 an einer temperaturmässig passenden Stelle des Abluftkessels 16 entnommen werden.

Ein weiterer Vorteil der beschriebenen Anlage ist darin zu sehen, dass der Lochboden 22 nicht mehr mit Wasserkühlung versehen werden muss und dass der Luftkasten unterhalb des Lochbodens aus verhältnismässig billigem und leicht bearbeitbarem Material hergestellt werden kann.

Schliesslich spart man durch die Rückkühlung der Luft etwa 20 % der Gebläseantriebsleistung.

Es könnte als vorteilhafter erscheinen, das Druckerhöhungsgebläse 20 am Ausgang des Zwangumlaufdampferzeugers 12 anzuordnen, wo die Temperatur noch tiefer ist. Durch die gezeichnete Schaltung wird demgegenüber verhindert, dass im Gehäuse des Dampferzeugers ein Unterdruck auftritt, der etwa dem Druckabfall der Wirbelschicht entsprechen würde. Ueberdies stellen sich bei der gezeichneten Schaltung am Druckerhöhungsgebläse 20 keinerlei Probleme bezüglich Korrosion und Ablagerungen ein.

Im Vergleich mit einer Drosselung des Luftstromes im Bereich des Abluftkessels 16 hat die gezeichnete Anordnung des Druckerhöhungsgebläses den Vorteil eines höheren Gesamtwirkungsgrades wegen geringerer Drosselverluste und insbesondere die investitionsmässig stark ins Gewicht fallende Wirkung, dass als Luftturbinengruppe eine serienmässig hergestellte Gasturbinengruppe eingesetzt werden kann, also keine Sonderausführung für erhöhten Druck am Turbinenaustritt gebaut werden muss.

Die Regelung der Verbrennungsluftmenge geschieht zweckmässig durch Schaufelverstellung oder, wie in Fig. 1 dargestellt, durch Drosseln am Eintritt des Gebläses 20. Als Regelgrösse wird beispielsweise die Wirbelbettemperatur benützt.

Ein Wirkungsgradgewinn ergibt sich dadurch, dass im Rekuperator 4 primär- und sekundärseitig gleiche Luftmengen strömen, was bei Gegenstromschaltung für eine vorgegebene Heizflächengrösse den besten Uebertragungseffekt und eine höhere Austrittstemperatur ergibt. Die höhere sekundärseitige Austrittstemperatur erlaubt eine Erhöhung der Dampftemperatur. Auch dieser Effekt ist mit einer Verbesserung des Anlagewirkungsgrades verbunden.

Das Anfahren der Anlage wird durch Inbetriebnahme der Heissluftturbinengruppe eingeleitet. Dabei wird die Heissluftturbinengruppe vom als Anfahrmotor geschalteten Generator 62 angetrieben, die Anfahrbrennkammer 2 gezündet, die Turbine 14 hochgefahren und der Generator 62 synchronisiert und schwach belastet. Die Turbine 14 liefert dann ein Abgasgemisch hohen Luftüberschusses zur Vorwärmung und Zündung des Wirbelbettes 24. Dank dieser Vorwärmung kann das Wirbelbett leichter und rascher gezündet werden, als wenn es kalt ist. Die Anfahrbrennkammer 2 erlaubt somit eine erhebliche Reduktion der Anfahrzeit.

Um die Einsatzdauer des Generators 62 als Anwurfmotor herabzusetzen, kann es angebracht sein, die Heizflächen 8 bis 10 durch eine Bypassleitung 64 mit geöffnetem Abschlussorgan 65 zu überbrücken, sodass zunächst die Hauptmenge der Abgase der Anfahrbrennkammer 2, ohne abgekühlt zu werden, an den Heizflächen 8 bis 10 vorbeiströmt. Erst mit dem Anzünden der Wirbelschichtfeuerung wird - der sich entwickelnden Temperatur entsprechend, jedoch mit genügender Temperaturreserve, um eine Beschädigung der Heizflächen 8 bis 10 zu vermeiden - das Abschlussorgan 65 geschlossen.

Der dampfseitige Teil der Anlage wird wie üblich betrieben. Selbstverständliche Bestandteile der Anlage, wie z. B. eine Turbinenbypassleitung mit Zubehör, sind im Schema nicht dargestellt.

Für den Teillastbetrieb der Anlage kann eine vom Speisewasserbehälter 56 zum Kondensator 43 führende Verbindungsleitung 68 mit Drosselventil 69 zweckmässig sein, denn sie erlaubt-ausgehend von der Kondensatpumpe 45 über das Ventil 47 und den Vorwärmer 52 - einen zusätzlichen Umlauf, durch den Wärme aus dem Speisewassergefäss 56 in den Kondensator 43 abgeführt werden kann. Durch diesen Umlauf wird vermieden, dass im Vorwärmer 52 Verdampfung mit ihren unerwünschten Folgen auftritt.

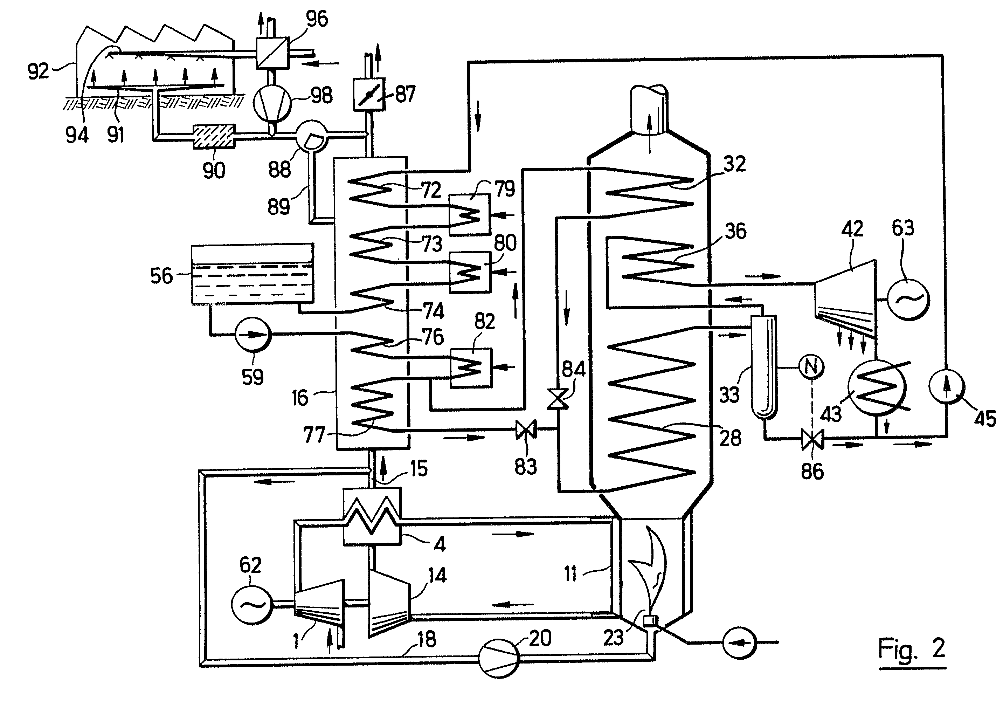

Im Ausführungsbeispiel gemäss Fig. 2 wird die im Heissluftturbinenprozess zirkulierende Luft nicht durch eine Wirbelschichtfeuerung, sondern durch eine Strahlungswärme abgebende Feuerung beheizt. Diesem Zweck dient eine die Feuerung einhüllende Heizfläche 11. Ausserdem ist der Abluftkessel 16 anders ausgebildet. Er enthält - in der Strömungsrichtung der Luft entgegen gerichtetem Sinne aufgezählt - drei Kondensatvorwärmer 72, 73, 74 und zwei Hochdruckvorwärmer 76 und 77. Zwischen die drei Kondensatvorwärmer 72 bis 74 sind zwei Anzapfdampfvorwärmer 79 und 80 und zwischen die Hochdruckvorwärmer 76 und 77 ist ein Anzapfdampfvorwärmer 82 geschaltet. Die beiden Vorwärmer 74 und 76 sind über den Speisewasserbehälter 56 und die Speisepumpe 59 miteinander verbunden.

Der Hochdruckvorwärmer 77 ist dem Economiser 32 parallelgeschaltet, wobei durch Ventile 83 und 84 das Speisewasser passend auf die beiden Wärmeübertrager 32 und 77 verteilt werden kann. An diese Wärmeübertrager schliesst sich der Verdampfer 28 an, der im Zwangdurchlauf betrieben wird und in einen Abscheider 33 mündet. Der Dampfaustritt des Abscheiders 33 führt zu einem Ueberhitzer 36, während der Wasseraustritt über ein Niveauhalteventil 87 zwischen Kondensator 43 und Kondensatpumpe 45 in die Kondensatleitung mündet.

Am Austritt des Abluftkessels 16 sind in Parallelschaltung eine ins Freie führende Drosselklappe 87 und ein Dreiwegschieber 88 angeschlossen, dessen zweiter Zufuhrstutzen über eine Leitung 89 mit einer zwischen den Kondensatovorwärmern 72 und 73 liegenden Stelle des Abluftkessels verbunden ist. Der Austritt des Dreiwegschiebers 88 ist über einen statischen Mischer 90 mit einem Warmluftverteilsystem 91 eines Fabrikgebäudes 92 verbunden. Dem Warmluftverteilsystem 91 ist ein Abluftkollektor 94 gegenübergesetzt, der zum primärseitigen Eingang eines Abluftrekuperators 96 führt. Dessen sekundärseitiger Ausgang ist über ein Frischluftgebläse 98 mit dem Eingang des statischen Mischers 90 verbunden.

Bei Betrieb der Anlage liegen die Temperaturen im Abluftkessel 16 unter Umständen derart, dass das Kondensat bzw. das Speisewasser am Eingang der Anzapfdampfvorwärmer 80 bzw. 82 die Temperatur erreicht hat, die dem entsprechenden Anzapfdruck entspricht. Dann kondensiert in den betreffenden Anzapfdampfvorwärmern kein Dampf. Sinkt jedoch die Eintrittstemperatur ab, so entziehen die Anzapfdampfvorwärmer der Dampfturbine 42 sebsttätig Dampf.

Das Gebäude 92 wird bei geringem Wärmebedarf durch Zufuhr einer geringen Ablufteilmenge vom Ende des Abluftkessels 16, gegebenenfalls bei noch ruhendem Gebläse 98, beschickt. Ist die örtliche Verteilung der Temperatur ungenügend, so wird die Liefermenge des Gebläses 98 erhöht. Der statische Mischer 90 vermeidet Luftsträhnen ungleicher Temperatur. Mit fallender Aussentemperatur wird zunächst die Luftzufuhr vom Austritt des Abluftkessels 16 her erhöht, indem der Dreiwegschieber 88 im Uhrzeigersinn gedreht und die Drosselklappe 87 gegen die Schliessstellung bewegt wird. Hat der Dreiwegschieber 88 die Zufuhr vom Kesselaustritt her voll geöffnet und ist die Drosselklappe 87 ganz geschlossen, so wird der Dreiwegschieber 88 so gedreht, dass Luft über die Leitung 89 aus der Zwischenstelle des Abluftkessels 16 bezogen wird.

Am Abluftkessel 16 können noch weitere, bei höheren Lufttemperaturen angebrachte Anzapfstellen vorgesehen sein.

Ein besonderer Vorteil der Anordnung des Gebläses 98 im im Frischluftzweig des Rekuperators 96 ist darin zu sehen, dass das Gebäude 92 unter leichten Ueberdruck gesetzt wird, was das Eindringen von Staub verhindert. Dieser Effekt gilt natürlich nur, wenn staubfreie Luft angesaugt wird oder wenn die angesaugte Luft entstaubt wird, z. B. durch Filter.

Abweichend von der gezeichneten Anordnung des Gebläses 98 zwischen dem Abluftrekuperator 96 und dem Mischer 90 könnte es auch an einem anderen der vier Anschlüsse des Abluftrekuperators angeschlossen sein, vorzugsweise am Frischlufteinlassstutzen. In diesem Falle wird die Antriebsleitung des Gebläses minimal und das Gebläsegeräusch durch den Rekuperator gedämpft, wobei der zuvor erwähnte Vorteil des leichten Ueberdruckes im Gebäude 92 erhalten bleibt.

Gebrüder Sulzer AG                          P.5545 Stmm

Patentansprüche

1. Kombinierte Heisslufturbinen-Dampfkraftanlage, wobei der Verdichter der Heisslufturbinengruppe austrittsseitig über die Sekundärseite eines Rekuperators und einen in einem Bereich sehr hohen Wärmeübergangs einer Feuerung, vorzugsweise einer Wirbelschichtfeuerung, befindlichen Wärmeübertrager mit der Heisslufturbine verbunden ist und wobei in der Heisslufturbine entspannte Luft als Verbrennungsluft der Feuerung zugeführt wird, dadurch gekennzeichnet, dass der Rekuperator (4) primärseitig in den Luftstrom zwischen der Heisslufturbine (14) und der Feuerung (23, 24) geschaltet ist.

2. Kombinierte Heisslufturbinen-Dampfkraftanlage nach Anspruch 1, dadurch gekennzeichnet, dass am primärseitigen Austritt des Rekuperators (4) ein von einem Teilstrom der Abluft durchsetzter Abluftkessel (16) angeschlossen ist, in dem Abluftwärme an Arbeitsmittel des Dampfprozesses übertragen wird.

3. Kombinierte Heisslufturbinen-Dampfkraftanlage nach Anspruch 2, dadurch gekennzeichnet, dass in den Luftstrom zwischen primärseitigem Austritt (15) des Rekuperators (4) und der Feuerung (23, 24) ein Druckerhöhungsgebläse (20) eingeschaltet ist.

4. Kombinierte Heisslufturbinen-Dampfkraftanlage nach Anspruch 3, dadurch gekennzeichnet, dass das Druckerhöhungsgebläse (20) mit einer Durchflussreguliereinrichtung (19) versehen ist zum Beeinflussen der Luftverteilung auf den Abluftkessel (16) und die Feuerung (23, 24).

5. Kombinierte Heisslufturbinen-Dampfkraftanlage nach ei-

0050687

nem der Ansprüche 1 bis 4, dadurch gekennzeichnet, dass Abluft, die mindestens den Rekuperator (4) durchströmt hat, zur direkten Gebäudeheizung verwendet wird.

6. Kombinierte Heisslufturbinen-Dampfkraftanlage nach Anspruch 5, dadurch gekennzeichnet, dass Abluft nach Mischung mit Frisch- oder Umluft im zu heizenden Gebäude (92) verteilt wird.

Fig. 1

Fig. 2

0050687

Europäisches
Patentamt

**EUROPÄISCHER RECHERCHENBERICHT**

Nummer der Anmeldung

**EP 80 10 7472**

| | **EINSCHLÄGIGE DOKUMENTE** | | | KLASSIFIKATION DER ANMELDUNG (Int.Cl.³) |
|---|---|---|---|---|
| Kategorie | Kennzeichnung des Dokuments mit Angabe, soweit erforderlich, der maßgeblichen Teile | betrifft Anspruch | | |
| X | 13e CONGRES INTERNATIONAL DES MACHINES A COMBUSTION CIMAC, 1979 Vienna, AT. W.E. FRAIZE et al.: "Coal-fired gas turbine power cycles using steam injection" <br><br> * Seite 3; Seite 4, Zeilen 1-13; Figur 1 * <br><br>-- | 1-3 | | F 01 K 23/06 <br> F 02 C 1/04 <br> 6/18 <br> 3/20 |
| A | DE - A - 2 309 198 (FOSTER WHEELER) <br><br>---- | | | |

RECHERCHIERTE SACHGEBIETE (Int. Cl.³)

F 01 K
F 02 C

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

~~Der vorliegende Recherchenbericht wurde für alle Patentansprüche erstellt.~~

| Recherchenort | Abschlußdatum der Recherche | Prüfer |
|---|---|---|
| Den Haag | 25-06-1981 | V. GHEEL |

EPA form 1503.1 06.78

# 0050687

**Europäisches Patentamt**

---

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden,

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

---

## ☒ MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung: sie enthält mehrere Erfindungen oder Gruppen von Erfindungen, nämlich:

1) Ansprüche 1-4
2) Ansprüche 5,6: Gebäudeheizung.

☐ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind,

nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen,

nämlich Patentansprüche: 1-4.